(19) Europäisches Patentamt European Patent Office Office européen des brevets

(11) **EP 3 905 155 B1**

## (12) EUROPEAN PATENT SPECIFICATION

(45) Date of publication and mention
of the grant of the patent:
**18.10.2023  Bulletin 2023/42**

(21) Application number: **20172325.1**

(22) Date of filing: **30.04.2020**

(51) International Patent Classification (IPC):
**G06Q 10/06** *(2023.01)*    **G06Q 50/02** *(2012.01)*
**A01B 79/00** *(2006.01)*    **G06V 10/44** *(2022.01)*
**G06V 10/82** *(2022.01)*    **G06V 20/10** *(2022.01)*
**G06V 20/17** *(2022.01)*

(52) Cooperative Patent Classification (CPC):
**G06Q 10/06; A01B 79/005; G06Q 50/02;
G06V 10/454; G06V 10/82; G06V 20/10;
G06V 20/17; G06V 20/188;** B64U 2101/30

(54) **MACHINE LEARNING APPLICATIONS IN AGRICULTURE**

MASCHINENLERNANWENDUNGEN IN DER LANDWIRTSCHAFT

APPLICATIONS D'APPRENTISSAGE MACHINE DANS L'AGRICULTURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.11.2021  Bulletin 2021/44**

(73) Proprietor: **Kverneland Group Operations Norway
AS**
**4353 Klepp Stasjon (NO)**

(72) Inventors:
• **HONKANEN, Joel**
 **4350 Kleppe (NO)**
• **CHUDALLA, Corinna**
 **59494 Soest (DE)**

(74) Representative: **Mader, Joachim
Bardehle Pagenberg Partnerschaft mbB
Patentanwälte, Rechtsanwälte
Prinzregentenplatz 7
81675 München (DE)**

(56) References cited:
**WO-A1-2018/220528    US-B2- 10 139 279**

## Description

### 1. Technical field

The present invention relates to machine learning applications in agriculture, in particular to a method, a corresponding system and computer program.

### 2. Prior art

The efficient performance of agricultural operations depends strongly on a detailed knowledge of various properties of an agricultural field, that can generally be summarized as geographical information relating to the agricultural field. For example, such geographical information may relate to the hardness of the soil, the degree of soil compaction, moisture levels in the soil, vegetation growing in or on the soil, depth of specific soil layers and surface dimensions thereof etc.

It is known that optical information may be used to aid in the control of agricultural operations.

US 2018/0068416 A1 discloses a system, wherein video data captured from an aerial vehicle (AV) is compressed into an aerial orthomosaic overview of an area. The orthomosaic may then be processed in combination with sensor values, measured by sensors sparsely deployed in the area, to generate precision maps for the entire area, including areas in which no sensors are deployed.

EP 0 857 325 B1 discloses an unmanned agricultural vehicle, wherein a monitoring system of the vehicle is provided with sensors on both sides of the vehicle close to the front and rear sides and in the center thereof and with the aid of which the distance to the ground can be measured, in that the monitoring system is provided with a computer which, after receiving signals from the sensors, is designed to transmit via the transceiver-installation a signal to a mobile transceiver-installation of a supervisor if the measured depth deviates from a required depth.

However, the amount of information recorded by optical devices may exceed the limits of what an operator of an agricultural working means may be able to process while operating the agricultural vehicle safely. There is therefore a need for automating the collection and interpretation of data that may be pertinent to an efficient operation of agricultural working means.

The idea of machine learning techniques such as deep learning originally dates back to the 1940s and which were then known as cybernetics. *"Deep Learning"* by Ian Goodfellow, Yoshua Bengio, and Aaron Courville, MIT Press 2016, describes various known deep learning techniques.

However, only recently available computing resources have become powerful enough to tackle challenging problems using machine learning techniques such as deep learning.

WO 2018/220528 A1 discloses a method for controlling a soil working means comprising acquiring at least one digital image of the soil by means of digital image acquisition means installed on the working means and processing, by means of an electronic processing unit, the at least one digital image acquired by performing at least one convolution operation on the digital image by means of a trained neural network.

US 10,139,279 B2 generally relates to systems and methods for improving the food supply chain, and in particular to information systems that support the decisions and the choices made by participants to the food supply chain.

However, such applications are still in their infancy today and there remains a significant need for improved methods of applying machine learning in the field of agriculture for such methods to be useful in practice.

Furthermore, the maintenance of agricultural working means often requires highly-skilled labour and expensive infrastructure that may not be locally available everywhere. It is therefore also an object underlying the present invention to improve the maintenance and diagnosis of the status of an agricultural working means.

### 3. Summary of the invention

The present invention proposes a method of providing information relating to an agricultural field and / or an agricultural working means according to claim 1 and a respective system according to claim 14 and a computer program according to claim 15.

In particular, an aspect of the present invention relates to a method according to claim 1.

It should be understood that the environment of the agricultural working means may comprise the agricultural working means.

The present invention thus allows a classification of an object to be determined by a machine learning unit.

The object may be a geographic object or the object may be at least a portion of the agricultural working means or any part thereof. For example, the object may be part of an agricultural implement or the object may be part of a driving means of the agricultural working means. The information database may be a geographic information database in the former case.

Thus, the present method may greatly simplify the planning of agricultural working operations. The present method may additionally simplify the maintenance of an agricultural working means. The method could be used during work on the field but could also be used at another time while work is not being performed on the field, e.g. for checking the status of the agricultural working means or the status of any agricultural implement, e.g. regarding maintenance requirements. The method may be performed while the agricultural working means is in a garage. Wear of the agricultural working means or parts thereof may thus be assessed advantageously. Additionally, the method may be useful for checking the status before or during transportation of an implement. The status could be checked remotely and e.g. combined with the delivery of wearing parts directly to the field.

The machine learning unit may use any type of machine learning method. Such machine learning methods may comprise supervised learning, unsupervised learning, reinforcement learning and neural networks/deep learning. Thus, the machine learning unit may use different machine learning tools to comply with different situations.

The machine learning unit may comprise a neural network. The neural network may be trained based on training data. This allows the neural network to learn how to classify the object. Training may comprise learning with a gradient descent method. Training may comprise backpropagation which greatly increases the efficiency of training the neural network. The training data may have been classified by a human. Training data from a library may be used. The network may be a pre-trained image recognition network available from a library.

A sufficiently large neural network can represent any function mapping from the input to the output. Therefore, neural networks are an extremely powerful tool for classifying many different types of objects.

The classification is stored in an information database so that it may be obtained at a later time, for example when there is no access to the neural network. The present invention thus allows vast amounts of information to be processed automatically that may greatly exceed the capability of the human driver, of the agricultural working means, to process, e.g. while performing agricultural operations, and to memorize, e.g. for future agricultural operations.

A neural network is understood to be any network comprising a plurality of artificial neurons. For example, the neurons may be sigmoidal neurons comprising a sigmoidal activation function, which allows the neural network to be trained stably thus allowing efficient learning of the neural network. However, the neurons may comprise a tanh or linear activation function.

The neural network may comprise an input layer comprising one or more input neurons, an output layer comprising one or more output neurons and one or more hidden layers comprising one or more hidden layer neurons.

The neural network may be a feedforward neural network, wherein the output from one layer is used as the input of a subsequent layer. The neural network may alternatively be a recurrent neural network comprising loops wherein an output is fed backward into the same or a preceding layer. A recurrent neural network may comprise a limit on the number of activations of a neuron.

The number of input neurons may be equal to the number of pixels of the image data. The value of each input neuron may be scaled to lie between 0 and 1 and may scale with a brightness values of a greyscale pixel of the image data. However, it is also possible that the image data comprises a color image and that there are, for example, three times as many input neurons as there are pixels in the image data.

The number of output neurons may correspond to the number of classification classes of an object one wishes to obtain.

The neural network may be a deep neural network comprising a plurality of hidden layers. A deep neural network allows even very complicated problems to be solved.

The agricultural working means may comprise any agricultural implement, like for example a cultivator, a disc harrow, a packer, a roller, a chopper, a seed drill, a disc spreader, a mower, a rake, a tedder, a round bale wrapper, etc.

A geographic object may be any object, regardless of size, that could be located on an agricultural field. The limits of a geographic object may be imaginary rather than physical. A geographic object may be e.g. a rock, an area comprising sand, soil, or vegetation, a ditch, a trench, a fence, a road, a path, a building, a power mast, etc.

A part of the agricultural working means may be any physically separable or inseparable entity, e.g. a wheel or tire of a driving means or an agricultural implement or a part of an agricultural implement, e.g. a blade of an agricultural implement etc.

The classification may comprise a position and / or an identification and / or a characterization of the object. A position may for example be a position of a center of the object or all of its bounds. An identification may describe the object's key property, such as: rock, soil, plant, fence, metal, rubber etc. A characterization may describe further properties such as: wet soil, dry soil, living plant, dead plant, damaged metal, flat tire, worn blade etc.

These classifications are important and very helpful for planning agricultural operations on the agricultural field. They may also be helpful for maintenance applications as described herein.

The method may further comprise prompting a user to confirm or reject the proposed classification of the object and updating the stored classification based thereon.

For example, the neural network may automatically classify a large number of objects and only prompt a user for confirmation or rejection if there is a certain minimum certainty of the automatic classification, i.e. the prediction of the neural network, is not reached.

The method may further comprise training the neural network based on the input and the confirmed and / or rejected classification. The neural network may be re-trained to improve the prediction accuracy for future predictions. This may be especially useful if the neural network was not previously trained based on a similar situation. For example, in the autumn leaves may cover an agricultural field and the neural network may only have been trained based on input obtained at other seasons and thus may not be able to reliably classify the object, e.g. the geographic object.

The method may further comprise training a second neural network based on the input and the confirmed and / or rejected classification, wherein the second neural network works with other classification tasks. This allows the accuracy of other classification tasks performed by the second neural network to be improved.

Generally, a key aspect in training neural networks relates to the quality and variability of the training data. The more varied the training data, the better a neural network can be trained and thus improving its classification accuracy.

The method may be at least partly performed while agricultural working operations are performed using the agricultural working means on the agricultural field.

This is particularly useful as it allows the current situation of the agricultural field to be assessed and analyzed. For example, the method may further comprise indicating the received output comprising the proposed classification of the object, e.g. the geographic object, to a user or an operator of the agricultural working means. The user or operator may thus adjust the agricultural working operations based on the indicated output.

It is also possible that the agricultural working operations are performed fully or at least partially automatically and that the agricultural working operations are adjusted based on the received output comprising the proposed classification of the object, e.g. the geographic object. For example, the agricultural working means may be self-driving and a path of the agricultural working means may be adjusted based on the classification of a geographic object located in front of the agricultural working means as a trench or a rock.

The method further comprises receiving sensor data from a sensor arranged on the agricultural working means and the input may further comprise the sensor data.

The accuracy of the output from the neural network comprising the proposed classification depends is improved strongly the greater the variety of input that is fed into the neural network. Thus, it is advantageous for the input to comprise sensor data from a sensor arranged on the agricultural working means.

The sensor data may comprise positioning data and / or orientation data of the agricultural working means and the sensor data comprise draft force data relating to the draft force required for dragging and / or pulling and / or pushing an agricultural implement, e.g. a plough, of the agricultural working means.

Additionally, or alternatively, the sensor data may comprise data relating to fuel consumption or energy consumption of the agricultural working means or parts thereof.

For example, the draft force (or fuel consumption or the energy needed) may be higher or lower when working the field and if this is not caused by the field properties, it could be verified whether it is caused by a defect tire or a malfunction in the agricultural working means, e.g. the tractor-plough connection or by a lost part or wear. Additionally, in case of checking the wear status e.g. of the soil working tools such as plough point, share and mouldboard regularly, the system will have learned at what time these parts or any part of the agricultural working means need to be exchanged. Additionally, or alternatively, the sensor data may comprise any data from the agricultural working means, e.g. the implement or tractor or any other device, e.g. relating to the adjustment and setup of the implement, data from a tilt sensor or tractor, distance measurements etc. Generally, the more meaningful or relevant the data that is fed into the neural network, the greater the accuracy of the output from the neural network comprising the proposed classification. Also from this perspective, it is thus advantageous for the sensor data to comprise positioning data and / or orientation data of the agricultural working means and / or draft force data relating to the draft force required for dragging an agricultural implement of the agricultural working means and / or the other types of data given above.

Positioning data of the agricultural working means may be especially useful if the image data is collected by an imaging device located on the agricultural working means. For example, positioning data of the agricultural working means may be meaningful in numerous ways on small and large scales.

On a large scale it may help the machine learning unit, e.g. the neural network to restrict the likely classifications. For example, a geographic item resembling a tree is unlikely to be a birch tree if the agricultural working means is located in Southern Europe etc.

On a small and large scale, the positioning data may be used to aid the classification of the geographic object wherein if the classification comprises the position of the geographic object. If the position of the geographic object relative to the agricultural working means can be determined and if the position of the agricultural working means is known, then the absolute position of the geographic object may be determined.

Positioning data may be received from a satellite receiver such a GPS, Galileo, Beidou, or GLONASS receiver or a combination thereof. Positioning data may be collected or improved by other methods such as device-to-device positioning over WLAN (wireless local area network).

Orientation data may comprise an orientation with respect to an axis of gravity, e.g. a tilt of the agricultural working means on an uneven agricultural field. Orientation data may comprise an orientation with respect to the magnetic North pole. Orientation data may be collected by a gyroscope and / or a compass, for example.

A draft force required for dragging an agricultural implement of the agricultural working means may yield additional information that is useful for the neural network that cannot easily be obtained from image data.

For example, the neural network may be able to classify a geographic object as soil based on the image data. The draft force required for dragging an agricultural implement of the agricultural working means may allow the degree of compaction of the ground to be classified by the neural network, which might not be possible based on the image data alone. As another example, an object may be classified as a blade of an agricultural implement and the draft force data may indicate there is a problem with the agricultural implement and that the agricultural implement should undergo maintenance.

The method may further comprise detecting an anomaly in the input. An anomaly may be identified as classification of an object that deviates by pre-determined margin from a probability distribution of an expected classification of the object. By modelling what a normal classification of one or more objects, e.g. geographic objects on the agricultural field comprises, it is possible to detect an anomaly. An anomaly may be a geographical anomaly, e.g. a trench, a ditch, a hole in the ground, a rock, dead vegetation, a different type of vegetation than in a surrounding environment, undesired weeds, etc. For example, on an agricultural field where rapeseed is grown, it would be anomalous if an object is classified as asparagus. An anomaly may an anomaly related to the agricultural working means, e.g. a damaged tire.

This may serve both to warn an operator or driver of the agricultural working means or, in the case of fully-automated operation of the agricultural working means, an operating unit of the agricultural working means, of an impending danger posed, e.g. by a rock in a planned driving path of the agricultural working means. It may also serve to help the planning of agricultural working operations, e.g. agricultural working operations may be planned to remove weeds from a specific area of the agricultural field in which undesired weeds are detected.

It could also help to plan maintenance. For example, an indication of a damaged tire could be used to plan a replacement of the tire before it is punctured, thus reducing the cost and difficulty of the maintenance operation. Problems may thus be diagnosed and recognized before they would become apparent to a human operator under normal circumstances.

The machine learning unit, e,g. the neural network, may be operated to provide the output remotely from the agricultural field. For example, the machine learning unit may be located on a server or in *"the cloud"* to provide greater processing power at lower cost than may be provided locally.

The image data may comprise data collected by an unmanned aerial vehicle, UAV, and / or collected by an imaging device in a user equipment and / or collected by an imaging device located on the agricultural working means. An unmanned aerial vehicle, UAV, may be a drone.

In the present invention the data of for instance optical sensors as well as other sensors may originate from several independent units, for example agricultural working means, implement, drone, camera, mobile, GPS unit etc. To synchronize time of all measurements, the present invention may encompass means for providing a global and common clock time base which may be used to timestamp all data samples and images.

This may require a common global clock or timing unit which may be accordingly provided with the present invention such that it may be ensured that all data (both optical and other sensor data) can be synchronized and placed accurate on a common timeline. Similarly, the position unit may ensure that all optical and other sensor data could be placed on the correct location on a map. Clock unit and position unit may be provided as the same unit or can be provided as separate units.

Collecting image data from a UAV may allow image data to be collected at different altitudes, for example at low altitude (10 m or below), medium altitude (10-50 m) or high altitude (above 50 m). This allows different scales of the agricultural field or the agricultural working means to be studied so that a classification may be provided with improved accuracy.

A user equipment may be a smartphone, an action camera, a digital camera, for example a mirrorless digital camera, a digital single-lens reflex camera etc. For example, a user equipment could be held by a user on or near the agricultural field or mounted on the agricultural working means, e.g. in a smartphone holder in the cockpit. This allows image data to be collected conveniently and allows an operator or user to make a decision as to what image data may be most useful for the classification.

The user equipment and / or the UAV and / or the imaging device located on the agricultural working means may comprise a first interface, for example: a wireless interface such as a wireless personal area network, Bluetooth, a wireless local area network (WLAN), a cellular network, or any type of wired interface. The user equipment and / or the UAV and / or the imaging device located on the agricultural working means may send the image data, or other data such as sensor data, over the first interface.

The method may further comprise receiving positioning data and / or orientation data, from the UAV and / or the user equipment. The input for the neural network may further comprise the positioning data and / or the orientation data.

The receiving of the image data, sensor data, positioning data, orientation data and / or any other data may comprise receiving the image data by a receiving unit. The receiving unit may be comprised in a computing device such as a user equipment, a smartphone, a laptop, a tablet computer, a desktop computer, a control computer located on the agricultural working means, a server located in the cloud etc.

The receiving unit may comprise a second interface. Receiving the image data may comprise receiving the image data over the second interface from the first interface. The second interface may comprise, for example: a wireless interface such as a wireless personal area network, Bluetooth, a wireless local area network (WLAN), a cellular network, or any type of wired interface.

The image data may comprises image data for a first wavelength band and a second wavelength band that is distinct from the first wavelength band, and wherein the input further comprises a normalized intensity difference between the first wavelength band and the second wavelength band.

For example, the first wavelength band may be from 0.4 to 0.7 $\mu$m and the second wavelength band may be from 0.7 to 1.1 $\mu$m. A normalized intensity difference between an intensity *"Red"* in the first wavelength band and an intensity *"NIR"* in the second wavelength band may be normalized as follows:

$$NDVI = \frac{(NIR - Red)}{(NIR + Red)}$$

and may be a normalized difference vegetation index NDVI.

The quality of the classification depends crucially on the way that the input and also training data are represented. While it is possible to use techniques such as representation learning for the neural network to learn an optimized representation of the input, it is presently advantageous to select the input and training data based on human experience and knowledge. The NDVI is a powerful indicator to indicate whether or not an observed area comprises live vegetation, since the pigment in plant leaves, chlorophyll, strongly absorbs visible light from 0.4 to 0.7 $\mu$m. Thus, a large NDVI indicated live vegetation. For example, snow and ice typically have an NDVI of less than zero, water may have an NDVI of about zero, soil may have an NDVI of 0.1-0.2, dense vegetation can have an NDVI between 0.3 and 0.8, for example.

Thus, if input comprises a normalized intensity difference between the first wavelength band and the second wavelength band, the classification is likely to be much more accurate for most agricultural applications than if simply image data from a photograph is used as input.

It is particularly advantageous to use image data collected by an UAV, or drone, for this purpose since it may allow for a much higher resolution than if an NDVI is determined based on satellite image data. For image data obtained by a UAV, or drone, the spatial resolution may be controlled by varying the altitude of the UAV when the image data is collected. Moreover, cloud cover may hinder the collection of data by satellite whereas an UAV or drone flying below the clouds can collect such data.

The input may further comprise data relating to a moisture level of the soil of the agricultural field. Such data may be collected by a moisture sensor located on the agricultural working means and received as described elsewhere herein. Alternatively, or additionally such data may be obtained from other sources such a meteorological service.

The input may further comprise other data relating to soil properties and classification. Such data may be obtained from other sensing/sampling systems, or from external sources such as soil databases.

Soil properties (chemical and physical) and soil classification is important for tillage operations and can add value if they are available and can be used here, in similar way as proposed herein for moisture data.

This further allows the classification to be improved. For example, soil may look quite different in the image data depending on the moisture level in the soil.

The invention further concerns a system according to claim 13.

The system may further comprise means for prompting a user to confirm or reject the proposed classification of the object, e.g. the geographic object.

The system may or may not comprise the machine learning unit. In particular, the machine learning unit could be located remotely, for example on a server as described elsewhere herein.

The means for receiving the image data may comprise a receiving unit as described elsewhere herein. The means for collecting image data may comprise an unmanned aerial vehicle, UAV, and / or an imaging device in a user equipment and / or an imaging device located on the agricultural working means, as described in more detail elsewhere herein.

The means for feeding the input may comprise a third interface that may be similar or identical to the second interface as described herein.

The means for receiving the output may comprise the third and / or the second interface as described herein.

The means for prompting a user may comprise a processing unit and a display device. The means for prompting a user may be located at a remote location or a user equipment such as a smartphone.

The means for storing the classification may comprise a means for accessing a storage device. It is possible that the storage device is located in the cloud, i.e. remotely, but it could also be located locally. The storage device may comprise a hard disk drive, a solid state drive, a magnetic tape, optical storage means, and / or any other suitable non-transitory or transitory storage medium.

It is to be understood that the system may further comprise means for performing any or all means of the methods described herein.

The invention also concerns a computer program according to claim 14.

4. Short description of the figures

In the following, exemplary embodiments of the invention are described with reference to the figures. The figures show:

Fig. 1:    shows an exemplary embodiment of a system according to the present invention;

Fig. 2:    illustrates an exemplary artificial neuron for a method of the present invention;

Fig. 3:    illustrates an exemplary neural network suitable according to the present invention; and

Fig. 4:    illustrates a classification method according to the present invention.

## 5. Detailed description of preferred embodiments

In the following only some possible embodiments of the invention are described in detail. It is to be understood that these exemplary embodiments can be modified in a number of ways and combined with each other whenever compatible and that certain features may be omitted in so far as they appear dispensable.

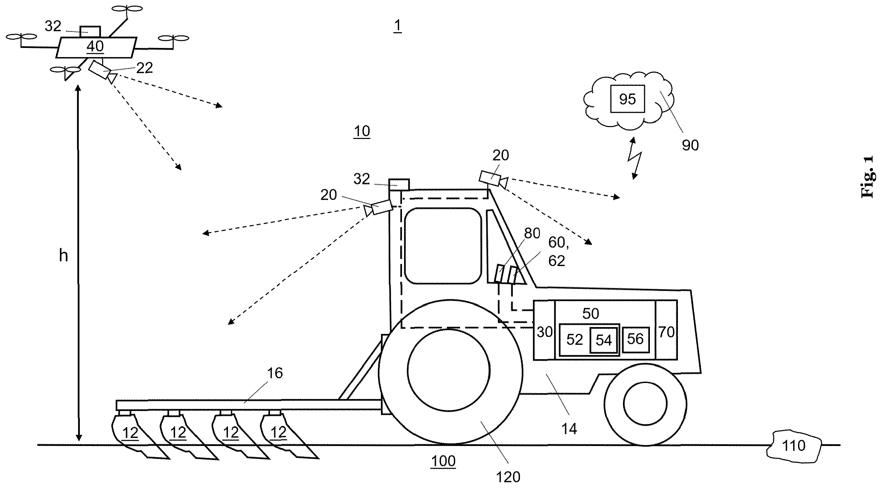

Fig. 1 shows an exemplary system 1 comprising: means 52 for receiving image data and means 20, 22 for collecting image data of an environment of an agricultural working means 10; means 56 for feeding an input wherein the input comprises the image data into a machine learning unit 95; means 56 for receiving an output from the machine learning unit 95 comprising a proposed classification of at least one geographic object 110 located in the environment of the agricultural working means; and means 60 for prompting a user to confirm or reject the proposed classification of the object, though other exemplary systems may not comprise a means 60 for prompting a user; and means 70 for storing the confirmed and / or rejected classification of the object in an information database.

In this example, the object is a geographic object and the information database is a geographic information database. This example thus mainly serves to illustrate how agricultural working operations can be improved by methods, systems and computer programs relating to aspects of the present invention.

However, as illustrated below, the object maybe at least a part of an agricultural working means. In that case the maintenance of the agricultural working means or parts thereof can be improved by methods, systems and computer programs relating to aspects of the present invention.

In this example, the machine learning unit 95 is located in the *"the cloud"* 90, i.e. on a remote server. However, it is possible that the machine learning unit 95 is located locally, e.g. in a user equipment such as a smartphone or the computing unit 50 of the driving means 14.

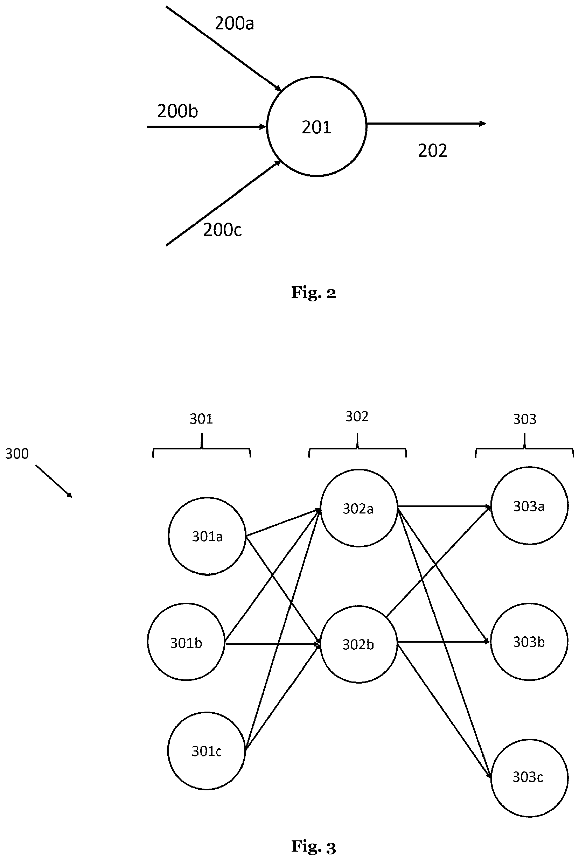

The machine learning 95 unit may generally use any type of machine learning method. However, in this example, the machine learning 95 unit comprises a neural network similar to the neural network 300 illustrated in Fig. **3.**

In detail, the exemplary system 1 may be operated as follows:

Fig. 1 shows an exemplary agricultural working means 10 comprising an agricultural working implement 16, which in this case is a plough with plough shares 12. The agricultural working means 10 further comprises a driving means 14, which in this case is a tractor, wherein the driving means 14 and the agricultural working implement 16 are interconnected. As shown, the driving means 14 and the plough may be used for ploughing an agricultural field 100. Although the exemplary embodiment relates to ploughing, the present invention is not limited to this particular embodiment but is suitable for any agricultural application.

The driving means 14 comprises two means for collecting image data, in this case two first imaging devices 20, which are cameras, which are attached and arranged at the front side and the rear side of the driving means 14. The first imaging devices acquire images from the front and rear environment of the driving means 14. In the embodiment shown, a position unit 30 is provided at the driving means 14, which determines the position of the agricultural working means 10, in particular the positions of the driving means 14 and the agricultural working implement 16. The two first imaging devices 20 are connected to the position unit 30, such that data exchange between the position unit 30 and the first imaging devices 20 is enabled. The position unit can therefore determine the absolute positions of the two first imaging devices 20.

In the embodiment shown, a further means for collecting image data, in this case a second imaging device 22 is provided at an unmanned aerial vehicle, UAV, or drone 40. The unmanned aerial vehicle 40 acquires images from an altitude h above the agricultural field 100, in this example approximately 15-20 m. The extent to which the image data is useful for classification may depend on a certain altitude or angle of detection, therefore, the unmanned aerial vehicle 40 could be directed to a position at a suitable altitude allowing acquisition at an optimal altitude and/or acquisition angle to allow improved classification.

The imaging devices 20 and 22 transfer their images comprising image data to a computing unit 50, which is provided at the driving means 14. However, it is also possible that the computing unit 50 is provided in a smartphone or tablet computer of an operator of the driving means, for example.

The computing unit 50 comprises a means 52 for receiving image data, in this case a receiving unit 52 comprising a second interface 54, which in this case is a wireless interface, e.g. a WLAN-interface, for receiving the image data.

Data transfer between the imaging devices 20, 22 and the computing unit 50 could be established in any suitable manner, for instance, as shown, in a wired connection as shown for the first imaging devices 20 and in a suitable wireless manner for the second imaging device 22.

The method further comprises collecting and receiving sensor data from a sensor arranged on the agricultural working means 10 and the input further comprises the sensor data.

The sensor data may comprise positioning data and / or orientation data of the agricultural working means and the sensor data comprise draft force data relating to the draft force required for dragging an agricultural implement of the agricultural working means.

In some embodiments, the input may further comprise data relating a moisture level of the soil of the agricultural field, e.g. obtained from a moisture detection sensor on the agricultural implement.

The computing unit 50 comprises means 56 for feeding an input wherein the input comprises the image data into a neural network. In this example, the means for feeding the input into a neural network comprises a third interface 56, which is in this case is a cellular interface, e.g. a 4G interface. The neural network may be a neural network such as the one shown in Fig. 3 and is in this case located in a server in the cloud. Thus, the vast computational power available in the cloud may be utilized to obtain an accurate classification, even of noisy image data.

However, the neural network may be located locally, for example in the computing unit 50. Thus, the classification may be obtained even if there is no connection to the cloud, for example on a remote agricultural field located in the countryside. In that case, the neural network was preferably trained in the cloud since training the neural network is a computationally demanding task that requires much more computational resources than classification using a trained neural network.

The computing unit comprises means 56 for receiving an output from the neural network comprising a proposed classification of at least one object 110 located in the environment of the agricultural working means. In this example, the means for receiving the output comprises the third interface 56. In this example the object 110 is a geographic object 110 and is correctly classified as a rock 110 by the neural network. It is possible that algorithms for anomaly detection are used for the classification to detect an anomaly such as the rock 110 in the input.

For example, such detection may be done quite straightforwardly on a field comprising mainly live vegetation as follows:

In an embodiment, the image data may comprise image data for a first wavelength band and a second wavelength band that is distinct from the first wavelength band, and the input may further comprise a normalized intensity difference between the first wavelength band and the second wavelength band. In this embodiment, the first wavelength band is from 0.4 to 0.7 $\mu$m and the second wavelength band is from 0.7 to 1.1 $\mu$m. A normalized intensity difference between an intensity *"Red"* in the first wavelength band and an intensity *"NIR"* in the second wavelength band is formed as follows:

$$NDVI = \frac{(NIR - Red)}{(NIR + Red)}$$

which is known as a normalized difference vegetation index, NDVI.

The NDVI is a powerful indicator to indicate whether or not an observed area comprises live vegetation, since the pigment in plant leaves, chlorophyll, strongly absorbs visible light from 0.4 to 0.7 $\mu$m. Thus, a large NDVI indicated live vegetation. Therefore, live vegetation on the field may be found to have an NDVI or about 0.5, for example while the geographic object 110 may have an NDVI of about 0.1. Thus, the neural network may easily classify the rock 110 as an anomaly.

In the embodiment shown, a position determination unit 32 is provided at the driving means 14. As depicted, the position determination unit 32 is a GPS receiver for determining of the position of the driving means 14, which exchanges data with the position unit 30. A similar position determination unit 32 is located on the UAV 40. The classification of the geographic object further comprises the position of the rock 110, which is obtained from the input comprising the image data received from imaging devices 20 located on the driving means 14 and the position of the driving means 14, as determined by a position determination unit 32 located on the driving means 14. Similarly, the image data from the UAV 40 and the position of the drone may be used analogously. In some embodiments, the agricultural working means 10 and / or the drone 40 may comprise a compass and / or a gyroscope for obtaining orientation data that may also be comprised in the input.

The driving means 14 comprises means 70 for storing the classification of the geographic object in a geographic information database. In this example, the means 70 comprises a solid state drive 70, chosen for its high resilience and sturdiness. Alternatively, the means 70 for storing the classification may be located in a smartphone, a tablet computer or may even be stored in the cloud, where data storage capacity is virtually unlimited. Thus, the operator of the driving means may access this information for present and future operation of the driving means 14 to allow a safe operation of the driving means 14 that avoids the rock 110, or the operator may make preparations for removing the rock 110, depending on feasibility and necessity.

A user or operator of the driving means 14 can be prompted on a means for prompting, in this case a display device 60, which is provided at a smartphone 62, which is mounted in a smartphone holder inside the driving compartment of the driving means 14, to confirm or reject the proposed classification of the geographic object and updating the stored classification based thereon. In this example, the smartphone 62 is connected to the computing means 50 by a cable, which can also be used for charging the smartphone. However, it is also possible that a wireless connection, e.g. WLAN, Bluetooth etc is used as described elsewhere herein. For example, if the geographic object was in fact a pile of leaves but was erroneously classified as a rock by the neural network, this classification could be corrected and the neural network re-trained accordingly to improve future classifications.

All of these steps of the described method may be performed while agricultural working operations are performed using the agricultural working means 10 on the agricultural field 100.

The display device 60 is located within the driving compartment of the driving means 14 such that a driver can directly see the images acquired by the imaging devices 20 and 22 and/or a map including one or more classified geographic objects, which would allow the driver of the tractor to control the ploughing or adjust the altitude of the unmanned aerial vehicle 40 in order to inspect a respective feature further. However, the display device 60 may alternatively be located at another location. For example, the smartphone 62 could be removed by the driver or a co-driver or colleague from the driving compartment and used outside of the driving compartment. Confirming or rejecting the proposed classification could be performed while agricultural operations are being performed or another time, e.g. after completing a first operation on the agricultural field 100 and while preparing for subsequent operations at home.

For controlling the unmanned aerial vehicle 40 and/or the agricultural working means 10, an operation input controller 80 is provided at the driving means 14, which allows a user to adjust any desired parameter of interest such as for example driving speed of the driving means 14, orientation of the driving means 14 and/or the agricultural working implement 16, plunging depth of the ploughing shares 12, altitude of the unmanned aerial vehicle 40, movement of the imaging devices 20 and 22 etc.

Some or all of the exemplary method steps may be performed by a computer program comprising code that, when executed, causes a computer to perform a method. For example, the computer program may be an app running on a user equipment such as a smartphone.

In another example, a method, system and computer program are used to improve maintenance operations relating to an agricultural working means.

In this example, the object 120 is a part of the agricultural working means, in this example the object 120 is a tire of the driving means 14. The method therefore simplifies the maintenance of the agricultural working means. The method may be used while agricultural workings operations are being performed by the agricultural working means on the agricultural field but could also be used at another time, e.g. while such agricultural workings operations are not being performed on the agricultural field by the agricultural working means.

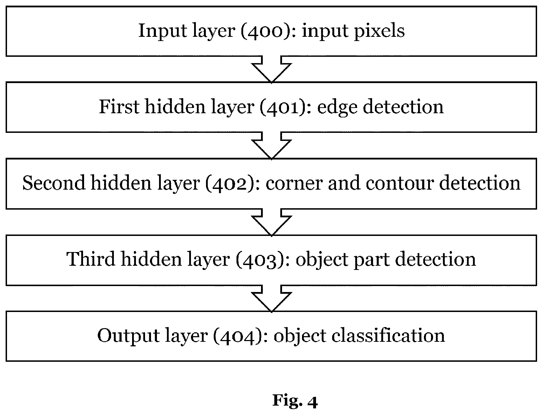

For example, the method may be used for checking the status of the agricultural working means or any agricultural implement status, e.g. regarding maintenance requirements. The method may be performed while the agricultural working means is located on the agricultural field or in a garage, or while travelling between the field and the garage. Wear of the agricultural working means or parts thereof may advantageously be assessed. The status could be checked remotely and e.g. combined with the delivery of wearing parts directly to the field. The method may comprise any or all of the steps described with respect to the method wherein the object is a geographic object. The invention also relates to the corresponding system wherein the object is a part of the agricultural working means and the corresponding computer program. For example, a classification obtained as described with reference to Fig. 4 may allow a damaged or worn tire 120 to be identified.

Fig. 2: illustrates an exemplary artificial neuron 201 for a method of the present invention. The exemplary neuron 201 received three inputs $x_1$, 200a, $x_2$ 200b, and $x_3$ 200C and provides an output $y=f(w_1x_1 + w_2x_2 + w_3x_3 + b)$, wherein $w_1$, $w_2$, and $w_3$ are weights and b is a bias. The bias may be initially be set to a mean value of the three inputs $x_1$ 200a, $x_2$ 200b, and $x_3$ 200c. In an embodiment, the function f is the sigmoid function, whose output y 202 is given by:

$$\frac{1}{1 + \exp(- \sum_j w_j x_j - b)}.$$

In other words, the neuron 201 is a sigmoidal neuron. The output of the neuron is thus not limited to "fire" or "don't fire" but is instead a continuous and differentiable function whose output is between 0 and **1.** However, other neurons may be used, e.g. comprising a linear function or a hyperbolic tan function, e.g. $y=\tanh(w_1x_1 + w_2x_2 + w_3 x_3 + b)$.

Fig. 3: illustrates an exemplary neural network 300 according to the present invention. The neural network 300 comprises an input layer 301 comprising input neurons 301a, 301b, and 301c, which correspond to the inputs three inputs $x_1$ 200a, $x_2$ 200b, and $x_3$ 200c of the neuron 201 shown in Fig. 2.

In some embodiments, the number of input neurons is equal to the number of pixels of the image data. The value of each input neuron may be scaled to lie between 0 and 1 and may scale with a brightness values of a greyscale pixel of the image data. However, it is also possible that the image data comprises a color image and that there are, for example, three times as many input neurons as there are pixels in the image data.

The neural network 300 further comprises one hidden layer 302 comprising two hidden neurons 302a and 302b. The input of the hidden neurons 302a and 302b is the output of the input neurons 301a, 301b, and 301c, which corresponds to the input of the neural network. Each neuron in the hidden layer 302 may be similar to the neuron 201 shown in Fig. 2.

The neural network 300 further comprises one output layer 303 comprising three output neurons. In this example, the number of output neurons corresponds to the number of classification classes of a geographic object one wishes to obtain.

These aspects are further illustrated in Fig. 4 as described below.

The topology of the neural network 300 is only exemplary. It is to be understood that a neural network of the present invention may comprise any number of hidden layers, e.g. 1, 2, 3, 4, etc. The neural network may be a deep neural network comprising two or more hidden layers. Each hidden layer may comprise any number of hidden neurons. The exemplary neural network 300 is a feedforward neural, wherein the output from one layer is used as the input of a subsequent layer. The neural network may alternatively be a recurrent neural network comprising loops wherein an output is fed backward into the same or a preceding layer. A recurrent neural network may comprise a limit on the number of activations of a neuron.

The neural network may be trained based on training data. This allows the neural network to learn how to classify the geographic object. In some embodiments, training may comprise learning with a gradient descent method. Training may comprise backpropagation which greatly increases the efficiency of training the neural network. The training data may have been classified by a human.

Training data from a library may be used. The network may be a pre-trained image recognition network available from a library. For example, it is envisioned that the Inception model for image recognition developed by Google may be used and re-trained for agricultural applications. In some embodiments, the neural network may be developed on a platform such as TensorFlow, which is provided by Google.

Fig. 4 illustrates a classification method by a neural network according to the present invention.

In one example, the object may be a geographic object.

An input layer 400 comprises one or more input neurons that correspond to the input pixels. The output of the input neurons is fed into a first hidden layer 401 that is responsible for edge detection in the image data. The output of the first hidden layer 401 is fed as input into the second hidden layer 402 which is responsible for corner and contour detection. The output of the second hidden layer 402 is fed as input into the third hidden layer 403 which is responsible for object part detection. The output of the third hidden layer 403 is fed as output to the output layer which comprises the image classification.

For example, the output layer may comprise the following classifications and classification confidence for the geographic object 110 shown in Fig. 1:

| Classification | Confidence |
|---|---|
| Soil | 20% |
| Live vegetation | 5% |
| Rock | 70 % |
| Water | 2% |
| Ice | 3% |

In another example, the object may be a part of the agricultural working means, for example a tire, such as tire 120 shown in Fig. 1, and the obtained classification may be given as follows:

| Classification | Confidence |
|---|---|
| Punctured tire | 21% |
| Muddy tire | 4% |
| Severely worn tire | 68 % |
| Tire in mint condition | 4% |
| Tire marginally worn | 3% |

Thus, an informed decision may be made with respect to maintenance of the agricultural working means.

**List of reference signs**

| | |
|---|---|
| 1 | system |
| 10 | agricultural working means |
| 12 | plough shares |
| 14 | driving means |
| 16 | agricultural working implement |
| 20 | first imaging device |
| 22 | second imaging device |
| 30 | position unit |
| 32 | position determination unit |
| 40 | unmanned aerial vehicle |
| 50 | computing unit |
| 52 | receiving unit |
| 54 | second interface |
| 56 | third interface |
| 60 | display device |
| 62 | smartphone |
| 70 | means for storing |
| 80 | operation input controller |
| 90 | cloud |
| 95 | machine learning unit |
| 100 | agricultural field |
| 110 | geographic object |
| 120 | object |
| h | altitude |
| 200a-c | input |

| 201 | artificial neuron |
| 202 | output |
| 300 | neural network |
| 301 | input layer |
| 301a-c | input layer neurons |
| 302 | hidden layer |
| 302a-c | hidden layer neurons |
| 303 | output layer |
| 303a-c | output layer neurons |
| 400 | input layer |
| 401 | first hidden layer |
| 402 | second hidden layer |
| 403 | third hidden layer |
| 404 | output layer |

**Claims**

1. A method of providing information relating to an agricultural field (100) and / or an agricultural working means (10), comprising:

   receiving and / or collecting image data of an environment of an agricultural working means (10) located on the agricultural field (100);
   **characterised by**
   receiving sensor data from a sensor arranged on the agricultural working means (10), wherein the sensor data comprises draft force data relating to the draft force required for dragging and / or pulling and / or pushing an agricultural implement of the agricultural working means (10);
   feeding an input, wherein the input comprises at least the image data and the sensor data, into a machine learning unit (95);
   receiving an output from the machine learning unit (95), wherein the output comprises a proposed classification of at least one object (110, 120) located in the environment of the agricultural working means (10) or on the agricultural working means (10); and
   storing the classification of the object (110, 120) in an information database.

2. The method of claim 1, wherein the classification comprises a position and / or an identification and / or a characterization of the object (110, 120).

3. The method of one of the preceding claims, further comprising prompting a user to confirm or reject the proposed classification of the object (110, 120) and updating the stored classification based thereon.

4. The method of the preceding claim, further comprising training a neural network (300) based on the input and the confirmed and / or rejected classification.

5. The method of one of the preceding claims, wherein the method is at least partly performed while agricultural working operations are performed using the agricultural working means (10) on the agricultural field (100).

6. The method of one of the preceding claims, wherein the sensor data comprises positioning data and / or orientation data of the agricultural working means (10).

7. The method of one of the preceding claims, further comprising detecting an anomaly in the input.

8. The method of one of the preceding claims, wherein the machine learning unit (95) is operated to provide the output remotely from the agricultural field (100).

9. The method of one of the preceding claims, wherein the image data comprises data from an unmanned aerial vehicle, UAV (40), and / or an imaging device in a user equipment and / or an imaging device located on the agricultural working means (10).

10. The method according to the preceding claim, further comprising

    receiving positioning data and / or orientation data, from the UAV (40) and / or the user equipment, and wherein
    the input comprises the positioning data and / or the orientation data.

11. The method according to one of the preceding claims,

    wherein the image data comprises image data for a first wavelength band and a second wavelength band that is distinct from the first wavelength band, and
    wherein the input further comprises a normalized intensity difference between the first wavelength band and the second wavelength band.

12. The method according to one of the preceding claims, wherein the input further comprises data relating a moisture level of the soil of the agricultural field (100).

13. System comprising:

    means (52) for receiving and / or means (20, 22) for collecting image data of an environment of an agricultural working means (10);
    **characterised by**
    means for receiving sensor data from a sensor arranged on the agricultural working means (10), wherein the sensor data comprises draft force data relating to the draft force required for dragging and / or pulling and / or pushing an agricultural implement of the agricultural working means (10);

means (56) for feeding an input, wherein the input comprises at least the image data and the sensor data, into a machine learning unit (95);

means (56) for receiving an output from the machine learning unit (95), wherein the output comprises a proposed classification of at least one object (110, 120) located in the environment of the agricultural working means (10) or on the agricultural working means (10); and

means (70) for storing the confirmed and / or rejected classification of the object (110, 120) in an information database.

14. Computer program comprising code that, when executed, causes a computer to perform a method according to one of claims 1-12.

**Patentansprüche**

1. Verfahren zum Bereitstellen von Information in Bezug auf ein landwirtschaftliches Feld (100) und/oder ein landwirtschaftliches Arbeitsmittel (10), umfassend:

Empfangen und/oder Sammeln von Bilddaten einer Umgebung eines landwirtschaftlichen Arbeitsmittels (10), das sich auf dem landwirtschaftlichen Feld (100) befindet;
**gekennzeichnet durch**
Empfangen von Sensordaten von einem Sensor, der auf dem landwirtschaftlichen Arbeitsmittel (10) angeordnet ist, wobei die Sensordaten Zugkraftdaten in Bezug auf die Zugkraft umfassen, die zum Schleppen und/oder Ziehen und/oder Schieben eines landwirtschaftlichen Geräts des landwirtschaftlichen Arbeitsmittels (10) erforderlich ist;
Einspeisen einer Eingabe, wobei die Eingabe mindestens die Bilddaten und die Sensordaten umfasst, in eine Maschinenlerneinheit (95);
Empfangen einer Ausgabe von der Maschinenlerneinheit (95), wobei die Ausgabe eine vorgeschlagene Klassifizierung von mindestens einem Objekt (110, 120) umfasst, das sich in der Umgebung des landwirtschaftlichen Arbeitsmittels (10) oder auf dem landwirtschaftlichen Arbeitsmittel (10) befindet; und
Speichern der Klassifizierung des Objekts (110, 120) in einer Informationsdatenbank.

2. Verfahren nach Anspruch 1, wobei die Klassifizierung eine Position und/oder eine Identifikation und/oder eine Charakterisierung des Objekts (110, 120) umfasst.

3. Verfahren nach einem der vorhergehenden Ansprüche, ferner umfassend Auffordern eines Benutzers, die vorgeschlagene Klassifizierung des Objekts (110, 120) zu bestätigen oder abzulehnen, und Aktualisieren der gespeicherten Klassifizierung basierend darauf.

4. Verfahren nach dem vorhergehenden Anspruch, ferner umfassend Trainieren eines neuronalen Netzes (300) basierend auf der Eingabe und der bestätigten und/oder abgelehnten Klassifizierung.

5. Verfahren nach einem der vorhergehenden Ansprüche, wobei das Verfahren zumindest teilweise durchgeführt wird, während landwirtschaftliche Arbeitsvorgänge unter Verwendung des landwirtschaftlichen Arbeitsmittels (10) auf dem landwirtschaftlichen Feld (100) durchgeführt werden.

6. Verfahren nach einem der vorhergehenden Ansprüche, wobei die Sensordaten Positionierungsdaten und/oder Orientierungsdaten des landwirtschaftlichen Arbeitsmittels (10) umfassen.

7. Verfahren nach einem der vorhergehenden Ansprüche, ferner umfassend Erkennen einer Anomalie in der Eingabe.

8. Verfahren nach einem der vorhergehenden Ansprüche, wobei die Maschinenlerneinheit (95) betrieben wird, um die Ausgabe entfernt von dem landwirtschaftlichen Feld (100) bereitzustellen.

9. Verfahren nach einem der vorhergehenden Ansprüche, wobei die Bilddaten Daten von einem unbemannten Luftfahrzeug, UAV (40), und/oder einer Bildgebungsvorrichtung in einer Benutzerausrüstung und/oder einer Bildgebungsvorrichtung, die sich auf dem landwirtschaftlichen Arbeitsmittel (10) befindet, umfassen.

10. Verfahren nach dem vorhergehenden Anspruch, ferner umfassend

Empfangen von Positionierungsdaten und/oder Orientierungsdaten von dem UAV (40) und/oder der Benutzerausrüstung, und wobei
die Eingabe die Positionierungsdaten und/oder die Orientierungsdaten umfasst.

11. Verfahren nach einem der vorhergehenden Ansprüche,

wobei die Bilddaten Bilddaten für ein erstes Wellenlängenband und ein zweites Wellenlängenband, das sich vom ersten Wellenlängenband unterscheidet, umfassen, und
wobei die Eingabe ferner eine normalisierte Intensitätsdifferenz zwischen dem ersten Wellenlängenband und dem zweiten Wellenlängenband umfasst.

**12.** Verfahren nach einem der vorhergehenden Ansprüche, wobei die Eingabe ferner Daten in Bezug auf einen Feuchtigkeitsgrad des Bodens des landwirtschaftlichen Felds (100) umfasst.

**13.** System, umfassend:

Mittel (52) zum Empfangen und/oder Mittel (20, 22) zum Sammeln von Bilddaten einer Umgebung eines landwirtschaftlichen Arbeitsmittels (10);
**gekennzeichnet durch**
Mittel zum Empfangen von Sensordaten von einem Sensor, der auf dem landwirtschaftlichen Arbeitsmittel (10) angeordnet ist, wobei die Sensordaten Zugkraftdaten in Bezug auf die Zugkraft umfassen, die zum Schleppen und/oder Ziehen und/oder Schieben eines landwirtschaftlichen Geräts des landwirtschaftlichen Arbeitsmittels (10) erforderlich ist;
Mittel (56) zum Einspeisen einer Eingabe, wobei die Eingabe mindestens die Bilddaten und die Sensordaten umfasst, in eine Maschinenlerneinheit (95);
Mittel (56) zum Empfangen einer Ausgabe von der Maschinenlerneinheit (95), wobei die Ausgabe eine vorgeschlagene Klassifizierung von mindestens einem Objekt (110,120) umfasst, das sich in der Umgebung des landwirtschaftlichen Arbeitsmittels (10) oder auf dem landwirtschaftlichen Arbeitsmittel (10) befindet; und
Mittel (70) zum Speichern der bestätigten und/oder abgelehnten Klassifizierung des Objekts (110, 120) in einer Informationsdatenbank.

**14.** Computerprogramm, umfassend Code, der, wenn er ausgeführt wird, einen Computer veranlasst, ein Verfahren nach einem der Ansprüche 1-12 durchzuführen.

**Revendications**

**1.** Un procédé pour produire des informations relatives à un champ agricole (100) et/ou à un moyen d'agriculture (10), comprenant :

la réception et/ou le recueil de données d'image d'un environnement d'un moyen d'agriculture (10) se trouvant sur le champ agricole (100) ;
**caractérisé par** :

la réception de données de capteur provenant d'un capteur agencé sur le moyen d'agriculture (10), les données de capteur comprenant des données de force de traction relatives à la force de traction requise pour traîner et/ou tirer et/ou pousser un outil d'agriculture du moyen d'agriculture (10) ;
l'application d'une entrée à une unité d'apprentissage machine (95), l'entrée comprenant au moins les données d'image et les données de capteur ;
la réception d'une sortie issue de l'unité d'apprentissage machine (95), la sortie comprenant une classification proposée d'au moins un objet (110, 120) situé dans l'environnement du moyen d'agriculture (10) ou sur le moyen d'agriculture (10) ; et
le stockage de la classification de l'objet (110, 120) dans une base de données d'informations.

**2.** Le procédé de la revendication 1, dans lequel la classification comprend une position et/ou une identification et/ou une caractérisation de l'objet (110, 120).

**3.** Le procédé de l'une des revendications précédentes, comprenant en outre la sollicitation faite à un utilisateur de confirmer ou de rejeter la classification proposée de l'objet (110, 120), et la mise à jour en conséquence de la classification stockée.

**4.** Le procédé de la revendication précédente, comprenant en outre l'entraînement d'un réseau neuronal (300) sur la base de l'entrée et de la classification confirmée et/ou rejetée.

**5.** Le procédé de l'une des revendications précédentes, dans lequel le procédé est au moins partiellement mis en oeuvre pendant que des travaux d'agriculture sont effectuées à l'aide du moyen d'agriculture (10) sur le champ agricole (100).

**6.** Le procédé de l'une des revendications précédentes, dans lequel les données de capteur comprennent des données de positionnement et/ou des données d'orientation du moyen d'agriculture (10).

**7.** Le procédé de l'une des revendications précédentes, comprenant en outre la détection d'une anomalie sur l'entrée.

**8.** Le procédé de l'une des revendications précédentes, dans lequel l'unité d'apprentissage machine (95) est mise en oeuvre pour délivrer la sortie à distance du champ agricole (100).

**9.** Le procédé de l'une des revendications précédentes, dans lequel les données d'image comprennent des données provenant d'un drone volant, UAV (40), et/ou d'un dispositif d'imagerie d'un équipement utilisateur et/ou d'un dispositif d'imagerie situé sur le moyen d'agriculture (10).

10. Le procédé selon la revendication précédente, comprenant en outre :

la réception de données de positionnement et/ou de données d'orientation en provenance de l'UAV (40) et/ou de l'équipement utilisateur, et dans lequel
l'entrée comprend des données de positionnement et/ou des données d'orientation.

11. Le procédé selon l'une des revendications précédentes,

dans lequel les données d'image comprennent des données d'image sur une première bande de longueurs d'onde et sur une seconde bande de longueurs d'onde distincte de la première bande de longueurs d'onde, et
dans lequel l'entrée comprend en outre une différence d'intensité normalisée entre la première bande de longueurs d'onde et la seconde bande de longueurs d'onde.

12. Le procédé selon l'une des revendications précédentes, dans lequel l'entrée comprend en outre des données relatives à un niveau d'humidité du sol du champ agricole (100).

13. Système comprenant :

un moyen (52) de réception et/ou un moyen (20, 22) de recueil de données d'image d'un environnement d'un moyen d'agriculture (10) ;
**caractérisé par** :

un moyen de réception de données de capteur provenant d'un capteur agencé sur le moyen d'agriculture (10), les données de capteur comprenant des données de force de traction relatives à la force de traction requise pour traîner et/ou tirer et/ou pousser un outil d'agriculture du moyen d'agriculture (10) ;
un moyen (56) d'application d'une entrée à une unité d'apprentissage machine (95), l'entrée comprenant au moins les données d'image et les données de capteur ;
un moyen (56) de réception d'une sortie issue de l'unité d'apprentissage machine (95), la sortie comprenant une classification proposée d'au moins un objet (110, 120) situé dans l'environnement du moyen d'agriculture (10) ou sur le moyen d'agriculture (10) ; et
un moyen (70) de stockage de la classification confirmée et/ou rejetée de l'objet (110) dans une base de données d'informations.

14. Programme informatique comprenant du code qui, lorsqu'il est exécuté, fait en sorte qu'un calculateur mette en oeuvre un procédé selon l'une des revendications 1 à 12.

**Fig. 1**

**Fig. 2**

**Fig. 3**

Input layer (400): input pixels

First hidden layer (401): edge detection

Second hidden layer (402): corner and contour detection

Third hidden layer (403): object part detection

Output layer (404): object classification

Fig. 4

**REFERENCES CITED IN THE DESCRIPTION**

**Patent documents cited in the description**

- US 20180068416 A1
- EP 0857325 B1

- WO 2018220528 A1
- US 10139279 B2

**Non-patent literature cited in the description**

- **IAN GOODFELLOW ; YOSHUA BENGIO ; AARON COURVILLE.** Deep Learning. MIT Press, 2016